Europäisches Patentamt

European Patent Office

Office européen des brevets

(11) Veröffentlichungsnummer: **0 436 837 A1**

# (12) EUROPÄISCHE PATENTANMELDUNG

(21) Anmeldenummer: 90123374.2

(22) Anmeldetag: 06.12.90

(51) Int. Cl.5: **A61C 13/12, B24B 5/14**

Die Bezeichnung der Erfindung wurde geändert (Richtlinien für die Prüfung im EPA, A-III, 7.3).

(30) Priorität: 08.12.89 DE 3940797

(43) Veröffentlichungstag der Anmeldung:
**17.07.91 Patentblatt 91/29**

(84) Benannte Vertragsstaaten:
**DE FR IT SE**

(71) Anmelder: **Wernicke, Helmut**
**Nadorster Strasse 103**
**W-2900 Oldenburg(DE)**

(72) Erfinder: **Wernicke, Helmut**
**Nadorster Strasse 103**
**W-2900 Oldenburg(DE)**
Erfinder: **Weimann, Jürgen**
**Fritz-Reuter-Weg 12**
**W-2307 Strande(DE)**

(74) Vertreter: **Jabbusch, Wolfgang, Dr.**
**Elisabethstrasse 6**
**W-2900 Oldenburg(DE)**

(54) **Vorrichtung für die Bearbeitung der Innenteile von in der Zahnprothetik verwendeten konischen Verbindungen.**

(57) Die Erfindung betrifft eine Vorrichtung für die Bearbeitung der Innenteile von in der Zahnprothetik verwendeten Teleskopverbindungen, insbesondere Konuskronenteleskopverbindungen, mit einer angetriebenen, rotierenden Werkzeugscheibe (3) und mit einem Werkstückhalter (4), mit dem das zu bearbeitende Werkstück (9) an die Werkzeugscheibe heranführbar ist.

Der Erfindung liegt die Aufgabe zugrunde, eine Vorrichtung zu schaffen, mit der sich die Bearbeitung von Innenteilen für Teleskopverbindungen in möglichst kurzer Zeit unter Erreichen und Einhaltung optimaler Arbeitsergebnisse durchführen läßt.

Diese Aufgabe ist erfindungsgemäß dadurch gelöst, daß der Werkstückhalter einen Kopf (5) mit einer Spindel (6) mit Spindelantriebsorgan (7) und einem an der Spindel angeordneten Werkstückaufnahmeorgan (8) aufweist, in welches das Werkstück einspannbar ist und daß wenigstens der Kopf mittels eines Antriebselements um eine quer zur Spindel verlaufende Schwenkachse (12) bewegbar ist, wobei als Spindelantriebsorgan und als Antriebselement für das Schwenken Schrittmotore vorgesehen sind, die zwecks Ansteuerung vorbestimmter Dreh- und Schwenkstellungen über eine programmierbare, rechnergestützte Steuerung miteinander gekoppelt sind.

Fig.1

EP 0 436 837 A1

angewendet wird, lassen sich auch vorbestimmte Winkel einstellen, in denen die Längsachse des Werkstücks zur Rotationsachse der Werkzeugscheibe jeweils steht. Bei ungleichmäßiger Geometrie der äußeren Mantelfläche eines zu bearbeitenden Werkstücks ist jedem Flächenabschnitt der Mantelfläche auch ein bestimmter Winkel zur Rotationsachse der Werkzeugscheibe zugeordnet. Dadurch, daß Schwenken und Rotieren des Werkstücks während seinerAnlage an der Werkzeugscheibe über eine programmierbare, rechnergestützte Steuerung miteinander gekoppelt sind, kann jeder Abschnitt der zu bearbeitenden Oberfläche des Werkstücks, durch eine bestimmte Drehstellung des Werkstücks um die Spindelachse angefahren werden, und kann diesem Abschnitt dann auch der jeweils zugehörige Winkel zugeordnet werden. Während das Werkstück also mittels des Werkstückhalters an die Werkzeugscheibe herangeführt wird, überführt die Steuerung das gehaltene Werkstück durch den die Spindel antreibende Schrittmotor in vorbestimmte Drehstellungen, wobei das Werkstück gleichzeitig in den der jeweils abgerufenen Drehstellung zugeordneten Anstellwinkel zur Werkzeugscheibe geschwenkt wird.

Mit der erfindungsgemäßen Vorrichtung läßt sich dadurch die Endbearbeitung an Werkstücken der vorbeschriebenen Art in gewünschter Präzision in kürzester Zeit durchführen.

Zu bearbeitende Werkstücke sind durch Gießtechnik hergestellte Rohlinge. Dabei können mit besonderem Vorteil an den Rohling Mittel angeformt werden, die ein Einspannen des Rohlings in das Werkstückaufnahmeorgan ermöglichen. Das zur Durchführung der Gießtechnik notwendige Wachsmodell kann bereits mit einem das besagte Mittel letztlich ausformenden Element versehen werden, so daß schon das Wachsmodell mit der erindungsgemäßen Vorrichtung bearbeitet werden kann. Der vom Wachsmodell dann abgegossene Rohling weist somit bereits eine derart präzise Formgebung auf, daß seine Nachbearbeitung mit der erfindungsgemäßen Vorrichtung dann in wesentlich kürzerer Zeit durchgeführt werden kann. Bei hoch goldhaltigen Legierungen wirkt sich das auch durch eine Materialersparnis kostensenkend aus.

Vorzugsweise ist der Kopf am Werkstückhalter angeordnet und der gesamte Werkstückhalter mittels eines die Schwenkachse bildenen Achszapfens schwenkbar gelagert. Mit dem die Anstellwinkel des Werkstücks verändernden Schwenkantrieb wird somit der gesamte Werkstückhalter verschwenkt und folglich der an ihm angeordnete Kopf mit der Spindel und dem davon gedrehten Werkstück mitgeschwenkt.

Für die Aufnahme der Endbearbeitung eines Werkstücks kann in vorteilhaft einfache Weise so vorgangen werden, daß, bei stehender Werkzeugscheibe, das in das Werkstückaufnahmeorgan des Kopfes eingespannte Werkstück an die Werkzeugscheibe herangeführt wird, wobei beobachtet wird, ob der an der Werkzeugscheibe anliegende Abschnitt der Außenmantelfläche des Werkstücks an der Werkzeugscheibe voll anliegt. Die Drehstellung, die die Spindel in dieser Position des Werkstücks eingenommen hat, und der Schwenkwinkel, den der gesamte Werkstückhalter bei dieser bestimmten Drehstellung eingenommen hat, kann durch die programmierbare Steuerung aus den Schrittmotoren abgerufen und gespeichert werden. Wird das zu bearbeitende Werkstück nacheinander in verschiedene Drehstellungen gebracht und jedesmal die zur optimalen Anlage an die Werkzeugscheibe zugehörige Schwenkstellung des Werkstückhalters eingestellt und gespeichert, so ist durch die programmierbare, rechnergestützte Steuerung später, bei einem Betrieb mit der Vorrichtung, also bei drehender Werkzeugscheibe, automatisch reproduzierbar, bei welcher Position der Drehstellung welcher Anstellwinkel erforderlich ist, um eine optimale Anlage des zu bearbeitenden Werkstücks an der Werkzeugscheibe zu erreichen.

Mit Hilfe der programmierbaren Steuerung ist der Ablauf der Bearbeitung festlegbar, beispielsweise kann auch vorprogrammiert werden, nach welcher Zahl von Vollrotationen des Werkstücks die Bearbeitung beendet sein soll.

Die programmierbare Steuerung erlaubt auch eine Vorgabe der Teilung, also die der Anzahl der Flächenabschnitte des zu bearbeitenden Werkstücks entsprechenden Positionen, die während einer vollen Umdrehung des Werkstücks nacheinander vom Spindelantrieb angesteuert und abgefahren werden sollen. Dabei wird, wie vorbeschrieben, zu jeder einzelnen Drehposition der jeweils zugeordnete Schwenkwinkel ebenfalls angesteuert und durch den den Werkstückhalter mit dem die Spindel für die Drehung haltenden Kopf verschwenkenden Schrittmotor abgefahren.

Da die zu bearbeitenden Werkstücke, beispielsweise Innenteile für Kronenkonusteleskope, auch mit radial abstehenden Schultern, Absätzen oder dergleichen Vorsprüngen versehen sein können, ist eine Längsbeweglichkeit des Werkstücks während der Bearbeitung, also eine Beweglichkeit parallel zur Längsachse des Werkstücks, erwünscht. Dies wird bei der erfindungsgemäßen Vorrichtung dadurch gewährleistet, daß der Werkstückhalter eine parallel zur Spindelachse ausgerichtete Längsführung für den Kopf aufweist. Der gesamte Kopf kann beispielsweise nach Art einer Schlittenführung am Werkstückhalter geführt sein. Zur Arretierung des Kopfes gegenüber dem Werkstückhalter in einer bestimmten Position an der Längsführung ist ein Festsetzmittel vorgesehen.

gedeutete Spindelachse 11 gedreht werden. Da das Spindelantriebsorgan 7 ein Schrittmotor ist, kann die Drehung des Werkstücks 9 in einzelnen Drehschritten durchgeführt werden.

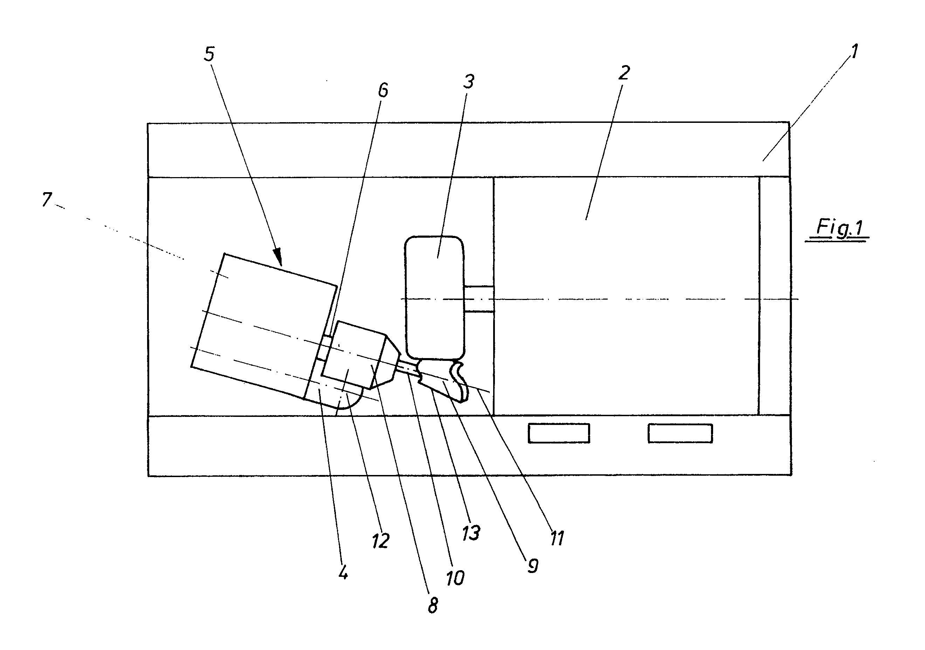

Der gesamte Werkstückhalter 4 ist mittels eines nachstehend noch näher beschriebenen Achszapfens 14 in einem den Grundrahmen der Vorrichtung bildenden Gehäuse 1 gelagert, derart, daß der Werkstückhalter 4 um die hier durch ein Achsenkreuz angedeutete Schwenkachse 12 schwenkbar ist. Je nach Schwenkstellung nimmt das Werkstück 9 eine Position ein, bei der sein jeweils mit der Werkzeugscheibe 3 in Anlage stehender Abschnitt der Außenmantelfläche in voller und gerader Anlage mit der Oberfläche der Werkzeugscheibe 3 steht. Fig. 1 läßt erkennen, daß die gezeichnete Schwenkstellung eine andere sein muß, wenn der hier sichtbare, einen anderen Neigungswinkel aufweisende Abschnitt 13 der Außenmantelfläche durch entsprechende Drehung des Werkstücks 9 mit der Werkzeugscheibe 3 in Anlage kommt.

Eine volle Umdrehung des Werkstücks 9 kann durch vorgebbare Teilung in entsprechende Drehpositionen, bzw. Abschnitte zerlegt werden, wobei jedem Abschnitt eine bestimmte Drehposition des Spindelantriebsorgans 7 zugeordnet ist. Diese Drehposition kann zusammen mit der jeweils zugeordneten Schwenkstellung des Werkstückhalters 4 in einem programmierbaren Rechner abgespeichert werden, der das Antriebsorgan 7 und ein Antriebselement für die Schwenkbewegung des Werkstückhalters 4 um die Schwenkachse 12 so steuert, daß während der Bearbeitung des Werkstücks zu jeder Drehposition des Werkstücks der zugehörige Schwenkwinkel wieder eingestellt wird.

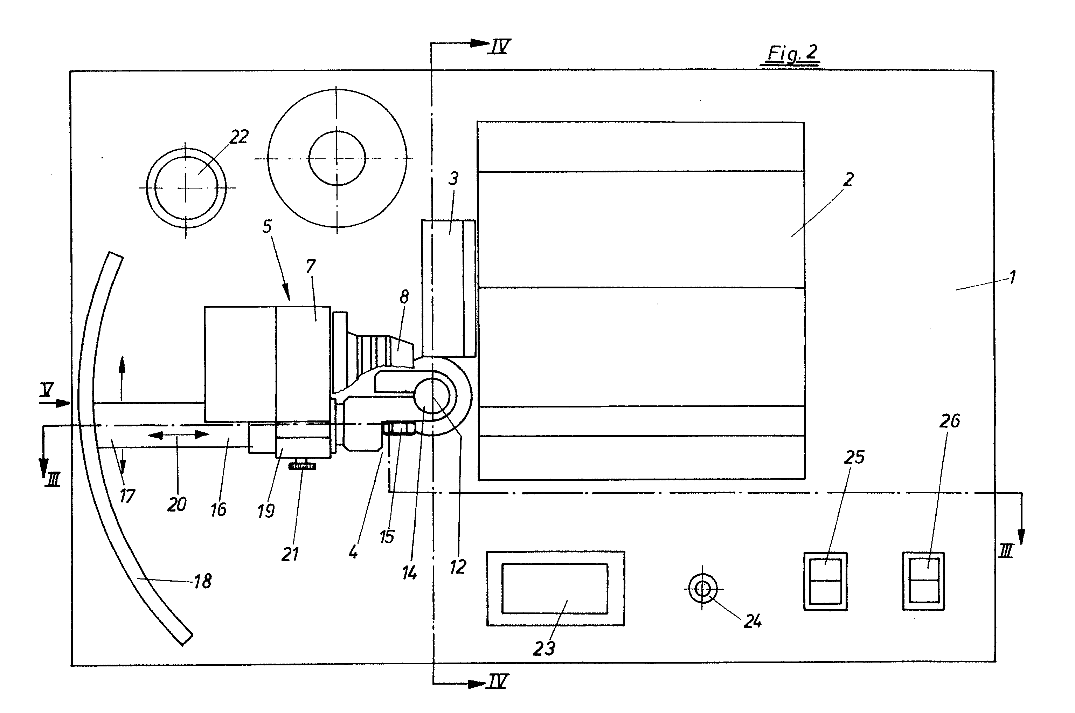

Fig. 2 zeigt die Vorrichtung gemäß Fig. 1 in einer detaillierteren Ausführung. Das als Spannfutter ausgebildete Werkstückaufnahmeorgan 8 ist hier teilweise abgebrochen dargestellt, um die darunter sichtbare Ausbildung des Werkstückhalters 4 sichtbar werden zu lassen.

Mit 1 ist wieder das einen Grundrahmen der Vorrichtung bildende, hier schematisch gezeichnete Gehäuse angegeben Auf der Oberseite des Gehäuses befindet sich der Schleif- und Poliermotor 2 mit der davon angetriebenen Werkzeugscheibe 3. Der Werkstückhalter 4 ist in seinem vorderen Bereich als Klemme ausgebildet, die einen die Schwenkachse 12 bildenden Achszapfen 14 umgreift und mittels der Schraube 15 daran festsetzbar ist. Der übrige Teil des Werkstückhalters ist, wie hier sichtbar, zu einem Auslegerarm 16 ausgebildet, dessen hinteres freies Ende 17 in einer Armführung 18 geführt und abgestützt ist. Die Armführung 18 besteht aus einem dem Schwenkradius des freien Endes 17 um die Schwenkachse 12 angepaßten Bogenblech, das z.B. aus einem hochkant stehenden Flachstahl gebildet sein kann, der auf dem Gehäuse 1 entsprechend befestigt ist.

Der Auslegerarm 16 des Werkstückhalters 4 besteht aus einem Rundprofil, das von einer Schiebehülse 19 umgriffen ist.

Der Kopf 5 ist auf der Schiebehülse 19 in axialer Richtung zu verstellen und mit der als Festsetzmittel dienenden Klemmschraube 21 zu fixieren. Damit ist der aus dem Spindelantrieb 7, der Spindel und dem Werkstückaufnahmeorgan 8 bestehende Kopf entlang dem Auslegerarm 16 längsgeführt verschiebbar, wie es durch den Doppelpfeil 20 angedeutet ist.

Mit 22 ist eine schematisch angedeutete Steckdose bezeichnet, in die eine als Lichtquelle dienende Stecklampe einsteckbar ist, mit der bei Bedarf der Anlagebereich zwischen den im Werkstückaufnahmeorgan 8 aufgenommenen Werkstück 9 und der Werkzeugscheibe 3 beleuchtet werden kann.

Für die Bedienung des Gerätes notwendige Anzeigen und Schaltelemente sind schematisch angedeutet. Mit 23 ist eine elektronische Anzeige bezeichnet, an der Drehpositionen des Spindelantriebsorgans oder Schwenkpositionen des Werkstückhalters ablesbar sind. 24 gibt einen Stellknopf an, um die vorbeschriebene Anzeige auf Null oder einen anderen Ausgangswert einstellen zu können. Mit 25 ist ein Schalter für das Einschalten des Poliermotors und mit 26 ein Schalter für die Inbetriebsetzung der nicht weiter dargestellten programmierbaren rechnergestützten Steuerungselektronik bezeichnet.

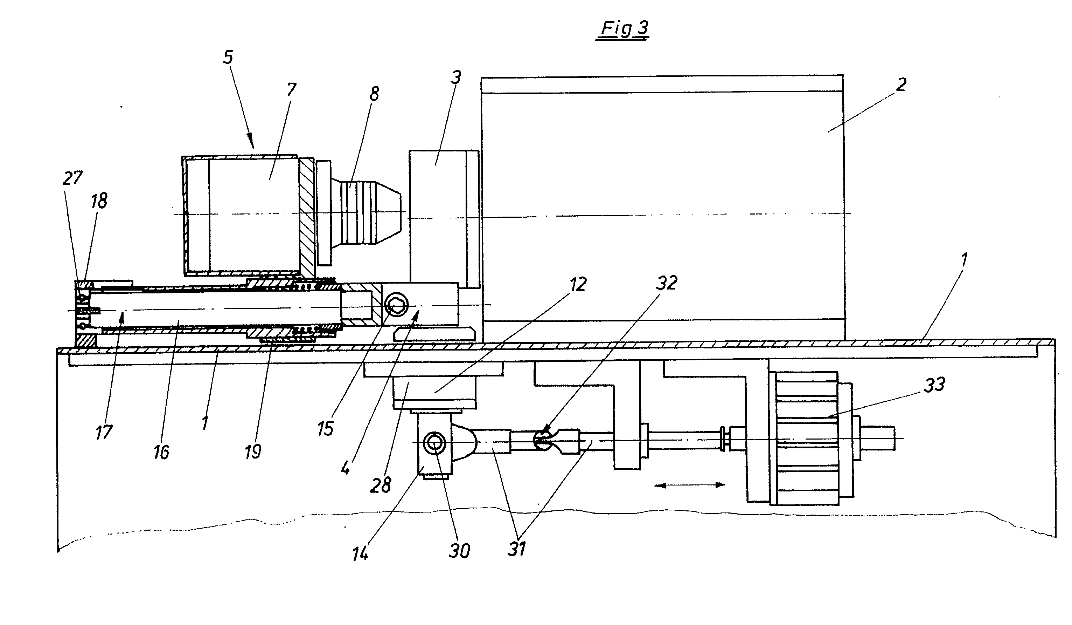

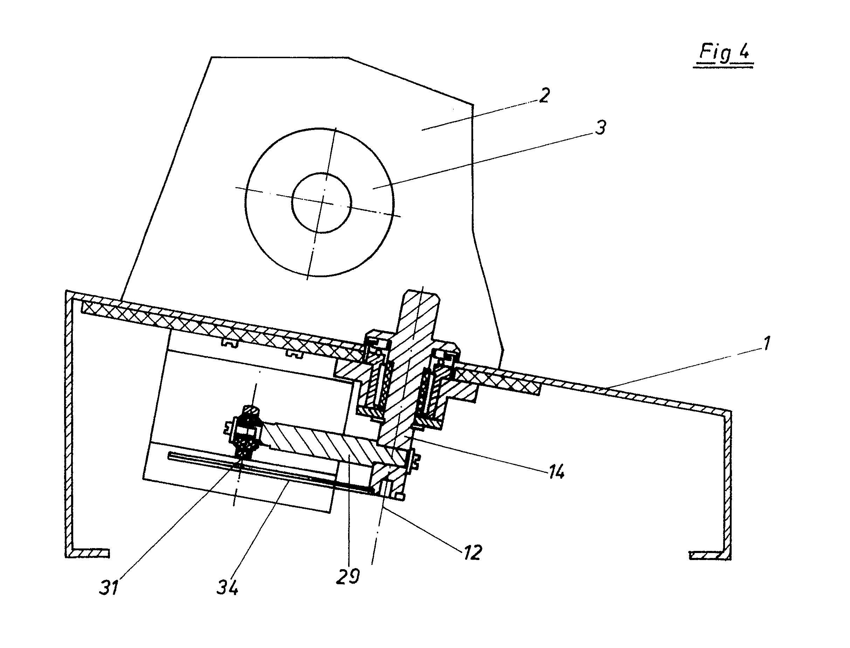

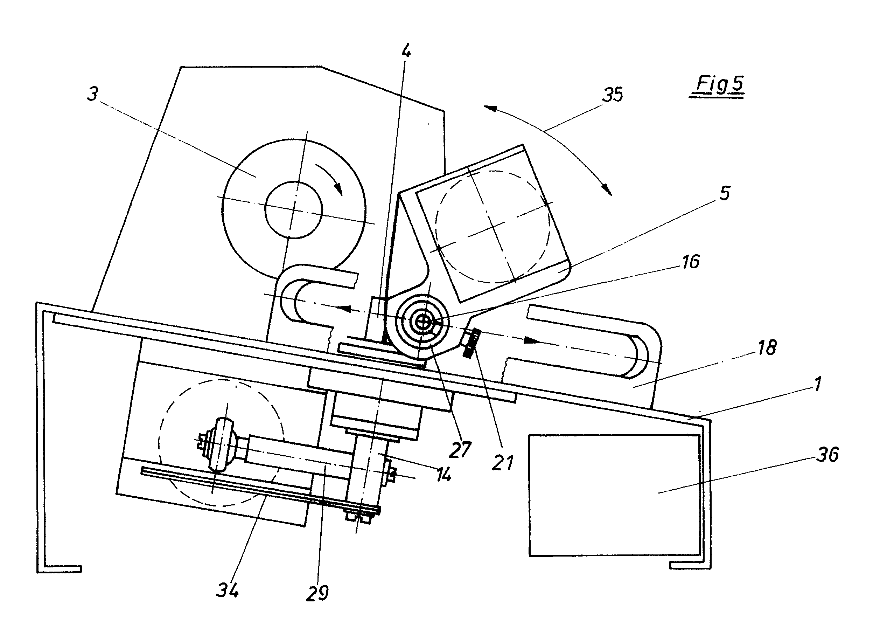

Fig. 3 zeigt die Vorrichtung gemäß Fig. 2 in einem Schnitt entlang der Linie III-III in Fig. 2. Gleiche Bauteile sind mit gleichen Bezugszahlen bezeichnet.

Fig. 3 läßt die Ausbildung der Armführung 18 erkennen, in der der Auslegerarm 16 des Werkstückhalters 4 mit einem an sein freies Ende 17 angesetzten Wälzlager 27 leichtbeweglich und präzise geführt ist, wenn der Werkstückhalter 4 um die Schwenkachse 12 geschwenkt wird. Die Schwenkachse 12 ist durch den in einem zugeordneten Lager 28 im Gehäuse 1 gelagerten Achszapfen 14 gebildet, an dem ein radial in die Zeichnungsebene hinein abstehender Hebelarm 29 (siehe Fig. 4) mit einer Verschraubung 30 befestigt ist. Am freien Ende des Hebelarms greift eine Zugdruckstange 31 an, die eine zwischengesetzte Kupplung 32 aufweist. Die Zugdruckstange 31 ist mit einem Linearschrittmotor 32 verbunden, der die Zugdruckstange 31 hin- und herbewegen kann, wobei der gesamtmögliche Hub des Linearschrittmotors 32 in Einzelschritte unterteilt ist, die von einer programmierbaren Steuerung einzeln angefahren werden können. Demzufolge kann mittels der Zugdruckstange 31 der Achszapfen, und damit auch der mit ihm verbundene Werkstückhalter 4, in vorbestimmte Schwenkstellungen gebracht werden.

Fig.1

EP 0 436 837 A1

Fig. 2

Fig 3

EP 0 436 837 A1

_Fig 4_

EP 0 436 837 A1

Fig 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-U-8 703 394   (C. HAFNER GmbH)<br>* Ansprüche; Abbildung 1 *<br>- - - | 1-4 | A 61 C 13/12<br>B 24 B 5/14 |
| A | DE-A-3 716 413   (KALTENBACH UND VOIGT GmbH)<br>* Spalte 4, Zeile 55 - Spalte 5, Zeile 6; Abbildung 1 *<br>- - - | 1,3-6 | |
| A | GB-A-2 096 500   (G. DAL LAGO)<br>* Seite 1, Zeilen 54-65 *<br>- - - | 1 | |
| A | EP-A-0 311 820   (FRITZ STUDER AG)<br>- - - | | |
| A | EP-A-0 033 492   (BECKER DENTAL GmbH)<br>- - - - - | | |

| | |
|---|---|
| | **RECHERCHIERTE SACHGEBIETE (Int. Cl.5)**<br><br>A 61 C<br>B 24 B |

Der vorliegende Recherchenbericht wurde für alle Patentansprüche erstellt

| Recherchenort | Abschlußdatum der Recherche | Prüfer |
|---|---|---|
| Den Haag | 14 Februar 91 | VILLENEUVE J-M.R.J. |